# EUROPEAN PATENT APPLICATION

(11) **EP 3 604 479 A1**
(43) Date of publication of application: **05.02.2020**
(21) Application number: 18382591.8
(22) Date of filing: 03.08.2018
(51) Int. Cl.: C09K 11/88

(54) **PROCESS FOR OBTAINING QUANTUM RINGS IN WATER WITH ENHANCED FLUORESCENCE INTENSITY**

(71) Applicant: Consejo Superior de Investigaciones Científicas (CSIC), 28006 Madrid (ES)
(72) Inventor: SAHA, Arpita, 08193 Cerdanyola del Vallès (Barcelona) (ES); SAINI, Abhishek, 08193 Cerdanyola del Vallès (Barcelona) (ES); TEIXIDOR BOMBARDÓ, Francesc, 08193 Cerdanyola del Vallès (Barcelona) (ES); VIÑAS TEIXIDOR, Clara, 08193 Cerdanyola del Vallès (Barcelona) (ES)
(74) Representative: Pons Ariño, Angel

(57) **Abstract**

The invention relates to a process for obtaining Quantum Rings in water by using a high pressure device. Moreover, the present invention is relates to the Quantum rings obtained by said process and a polymeric film comprising said Quantum Rings. In addition, the invention refers to the use of said Quantum Rings and said polymeric film in optoelectronics and for biotechnological and biomedical imaging applications. Therefore, the present invention could be included in the field of the preparation of nanotechnological materials (nanomaterials) with interest in optoelectronics and in biotechnology.

## Description

The invention relates to a process for obtaining Quantum Rings in water by using a high pressure device. Moreover, the present invention relates to the Quantum rings obtained by the said process and a polymeric film comprising said Quantum Rings. In addition, the invention refers to the use of said Quantum Rings and said polymeric film in optoelectronics and for biotechnological and biomedical imaging applications.

Therefore, the present invention could be included in the field of the preparation of nanotechnological materials (nanomaterials) with interest in optoelectronics and in biotechnology.

### STATE OF ART

Colloidal quantum dots (QDots) have been actively pursued for both fundamental research and industrial development due to their solution processability and size-dependent optical properties associated with quantum confinement. The most promising application of QDots is as emitters in biomedical labeling, solid-state lighting, and display. Meanwhile, QDots also are a promising new candidate for the emissive material in electroluminescence devices for display applications. Quantum dot light-emitting diodes (QLEDs) has advantages in color quality and stability especially when the fabrication of such devices was solution processing. This allows a considerable cost reduction and is therefore very attractive for industrial manufacturers. A. P. Alivisatos et. al. had taken the initial exploration for QDots devices in 1994. And over the past few years, the performance QLED has been progressively improved, both in efficiency and lifetime.

Quantum Dots, while interesting, have already been studied extensively and the focus has now shifted to structures that can be made in quantum regime without any natural analog. Quantum rings (QRings) are one such possibility in this field. They possess all the qualities of QDots with enhanced photoluminescence and conductance properties. By confining an electron to a 1D ring we fix the magnitude of its dipole moment, but not its direction. Classically an array of such rings will align in striped anti ferroelectric order (AFE).

Generally, the few examples of ring like structures that can be found in the literature are primarily prepared using molecular beam epitaxy. Mostly due to synthetic difficulties, the toroidal topology in the quantum regime is underrepresented so far in the quantum regime.

For the reasons stated above, it is needed to develop efficient and simple processes for obtaining Quantum Rings with enhanced fluorescence intensity.

### DESCRIPTION OF THE INVENTION

The present invention relates to a colloidal hydrothermal process for obtaining Quantum Rings with enhanced fluorescence intensity. It relates to a direct synthesis of Quantum Rings in water having a composition selected from ZnSe, ZnS, CdS or CdSe that is performed inside a high pressure device.

The term "Quantum rings" refers herein to ring like structures (toroidal topology in the quantum regime), this is having a diameter in the range of 5 nm to 20 nm, and particularly preferably in the range of 2 nm to 10 nm. The Quantum rings of the present invention exhibit unique optical and electric properties by the quantum confinement effects (quantum size effects) in which electrons and excitons are confined in a nanometer size small crystal.

The term "High pressure device" refers herein to High pressure tubes, autoclaves or high pressure stainless vessels. A preferred device is a high pressure tube which has enough pressure resistance to use it as container of the reaction for producing Quantum Rings. It is a heavy tube containing reagents and hermetically closed so that interaction of the contents can be brought about at a much higher pressure than would be possible in an open tube.

The process of the present invention is a green chemical process performed under hydrothermal conditions; concretely aqueous solutions of precursors are added into the high pressure device; conventional processes for obtaining Quantum materials use pyrolysis of often hazardous organometallic precursors at high temperatures instead.

The synthetic procedure is easy and highly reproducible with less cumbersome manipulations of the temperature and reaction conditions. It is a low-cost approach with environmental friendly conditions. The synthesis in water is also beneficial as it is easy to separate the particles after formation and it requires no post synthesis treatment in high temperatures to obtain the particles in solid state and remove excess solvent.

The Quantum Rings obtainable by hydrothermal conditions of the present invention show high aqueous stability; they are biocompatible. The Quantum Rings of the present invention are extremely good products for their use in biological media. Thus far, Quantum rings have only been synthesized using highly expensive physical methods like Epitaxial techniques or plasma etching; therefore studies existing are mostly theoretical; and only very few experimental studies can be found in the literature. Through colloidal synthesis rings have been synthesized only in organic medium. The present invention aims to provide a synthetic route that can produce quantum rings in water and in large quantities with enhanced fluorescence intensity.

Furthermore, the fluorescence intensity of the obtainable QRings, are higher when compared to the traditional QMaterials made in water such as etching, and epitaxy.

They may be used in optoelectronics as part of devices such as polarized emitters.

The quantum rings attract most attention for their toroidal topology and their ability to show Aharonov-Bohm effect. The Aharonov-Bohm effect, sometimes called the Ehrenberg-Siday-Aharonov-Bohm effect, is a quantum mechanical phenomenon in which an electrically charged particle is affected by an electromagnetic potential (V, A), despite being confined to a region in which both the magnetic field B and electric field E are zero. Quantum rings of the present invention can be used to study the Aharonov-Bohm Effect, for instance. Magnetotransport experiments on closed rings in the Coulomb blockade regime can be done and a microscopic understanding of energy levels, so far limited to few-electron quantum dots can be extended to a many-electron system. The electron motion in the Qrings is governed by regular rather than chaotic motion, an unexplored regime

A first aspect of the present invention relates to a process for obtaining Quantum rings in aqueous media having a composition selected from ZnSe, ZnS, CdS or CdSe, characterized in that it comprises the following steps:
a) sequentially adding an aqueous solution comprising Cd⁺² or Zn⁺², a surfactant agent and a reducing agent into high pressure device;
b) adjusting the pH of the solution obtained in step (a) by adding a base to reach a pH range between 9 and 12;
c) heating the high-pressure device to raise its temperature to a temperature value of between 85 °C and 95 °C;
d) adding an aqueous solution of SeO₂ or an aqueous solution comprising S²⁻ to the heated solution obtained in step (c);
e) heating the high pressure device to raise its temperature to a temperature value of between 150 °C and 170 °C and maintaining said temperature for a time period of between 50 min and 80 min;
f) quenching the solution obtained in step (e) to a temperature of between -15 °C and 35 °C thereby inducing precipitation; and
g) extracting the quenched precipitate obtained in step (f).

Step (a) relates to the sequentially addition of an aqueous solution comprising Cd⁺² or Zn⁺², a surfactant agent and a reducing agent into high pressure device.

For the obtainment of quantum rings of ZnSe and ZnS, an aqueous solution comprising Zn⁺² ions is used.

For the obtainment of quantum rings of CdSe and CdS, an aqueous solution comprising Cd⁺² ions is used.

Preferably, an aqueous solution of CdCl₂ is used as aqueous solution comprising Cd⁺² ions and an aqueous solution of zinc nitrate is used as an aqueous solution comprising Zn⁺² ions.

In a preferred embodiment of the process of the invention, the aqueous solution of CdCl₂ used in step (a) has a concentration of between 0.35 M and 0.45 M.

In another preferred embodiment of the process of the invention, the surfactant agent and the reducing agent of step (a) are the same as or different from each other.

Preferably, the surfactant agent and the reducing agent of step (a) are the same. This embodiment simplifies the process since it reduces the addition of reagents into the high pressure device.

In another preferred embodiment of the process of the invention, the surfactant agent and the reducing agent of step (a) are a mercaptan acid. Examples of mercaptan acids are mercaptoacetic acid, mecaptopropionic acid and mercaptosuccinic acid. The Mercaptan acid is preferred because it is very well soluble in water and it is also a good and strong capping agent. It adheres well with the quantum materials.

A further preferred embodiment of the process of the invention relates to the concentration of the surfactant agent and the reducing agent of step (a) is between 0.2 M and 0.3 M.

Step (b) of the process of the invention relates to the adjustment of the pH of the solution obtained in step (a) by adding a base to reach a pH range between 9 and 12.

Preferably, the base of step (b) is selected from the list consisting of amines, NaOH and KOH.

In a preferred embodiment of step (b) of the process of the invention, the desired pH is ranging between 10 and 11.5.

Step (c) of the process of the invention relates to the heating of the high pressure device to raise its temperature to a temperature value of between 85 °C and 95 °C. Preferably, this step (c) is performed by introducing the high pressure device into a sand bath,

Step (d) of the process of the invention relates to the addition of an aqueous solution of SeO₂ or an aqueous solution comprising S²⁻, into the high pressure device, to the heated solution obtained in step (c).

For the obtainment of Quantum Rods of ZnSe or CdSe, an aqueous solution of SeO₂ is used. Preferably, the aqueous solution of SeO₂ used in step (d) has a concentration of between 0.8 M and 1.5 M.

For the obtainment of Quantum Rings of ZnS or CdS, an aqueous solution comprising S²⁻ ions such as (Na₂S.9H₂O) is used.

Step (e) of the process of the invention relates to the heating the high pressure device to raise its temperature to a temperature value of between 150 °C and 170 °C and maintaining said temperature for a time period of between 50 min and 80 min;

Step (f) of the process of the invention refers to the quenching of the solution obtained in step (e) to a temperature of between -15 °C and 35 °C thereby inducing precipitation. Preferably, the quenching of step (f) is performed in air or ice.

Last step, step (g) of the process of the invention, refers to the extraction of the quenched precipitate obtained in step (f). Preferably said extraction is performed by centrifugation.

A further aspect of the present invention refers to the Quantum rings obtainable by the process described above, characterized in that their mean diameter is between 5 nm to 20 nm. Preferably, their mean diameter of the Quantum rings ranges between 2 nm and 10 nm.

As mentioned before, the term "Quantum rings" refers herein to ring like structures (toroidal topology in the quantum regime), this is having a diameter in the range of 5 nm to 20 nm, and particularly preferably in the range of 2 nm to 10 nm. The Quantum rings of the present invention exhibit unique optical and electric properties by the quantum confinement effects (quantum size effects) in which electrons and excitons are confined in a nanometer size small crystal.

The next aspect of the present invention refers to a film (herein "the polymeric film of the invention"), characterized in that
- it is made of a polymer selected from a Poly(vinyl alcohol), Polyvinyl Butyral, Polyvinyl Formal and Polydimethyl siloxane,
- it comprises the Quantum Rings of the invention,
wherein the Quantum Rings are homogeneously distributed in the polymeric film, and wherein the proportion of the Quantum Rings in the polymeric film is between 70 % to 95 % depending on the thickness of the films. If the film is 10 slices thick with each slice being 10 µm then it has a probable distribution of 70 % while if there are 25 slices then it has a higher distribution of around 90 % to 95%.

The process for obtaining the polymeric film of the invention is any conventional process for obtaining polymeric films known by the skilled in the art, wherein the starting compounds or precursor materials are the Quantum Rings of the invention and a solution of a suitable polymer such as a Polyvinyl alcohol, Polyvinyl Butyral, Polyvinyl Formal and Polydimethyl siloxane in an appropriate solvent.

The last aspect of the invention refers to the use of the Quantum materials selected from Quantum dots or Quantum rings described above,

Another aspect of the present invention refers to the use of the Quantum Rungs and the polymeric film of the invention as part of a device useful in optoelectronics such as a polarized emitter.

Another aspect of the invention refers to the use of the Quantum Rings of the invention in biotechnological applications such as biological label reagent.

A further aspect of the present invention refers to the Quantum Rings and the polymeric film of the invention as part of a device useful for biomedical imaging applications.

Another aspect of the present invention refers to the use of the Quantum Rings and the polymeric film of the invention as part of a Quantum light-emitting diode LED.

Unless otherwise defined, all technical and scientific terms used herein have the same meaning as commonly understood by one of ordinary skilled in the art to which this invention belongs. Methods and materials similar or equivalent to those described herein can be used in the practice of the present invention. Throughout the description and claims the word "comprise" and its variations are not intended to exclude other technical features, additives, components, or steps. Additional objects, advantages and features of the invention will become apparent to those skilled in the art upon examination of the description or may be learned by practice of the invention. The following examples and drawings are provided by way of illustration and are not intended to be limiting of the present invention.

### BRIEF DESCRIPTION OF THE DRAWINGS

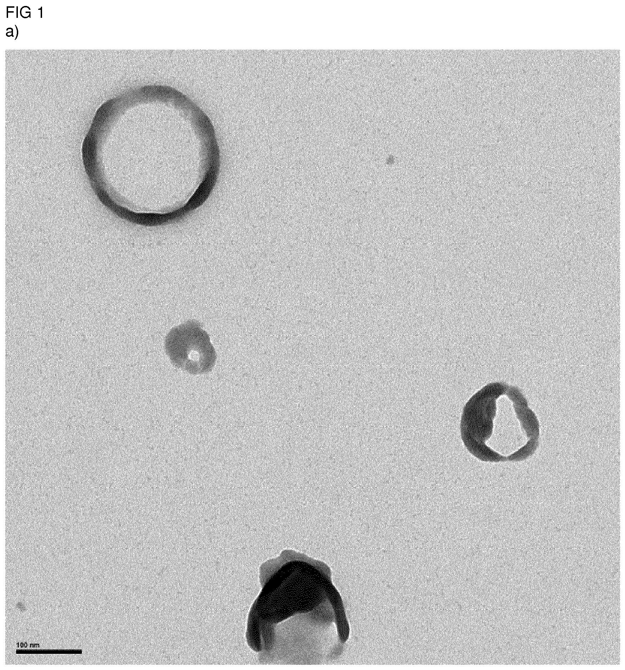

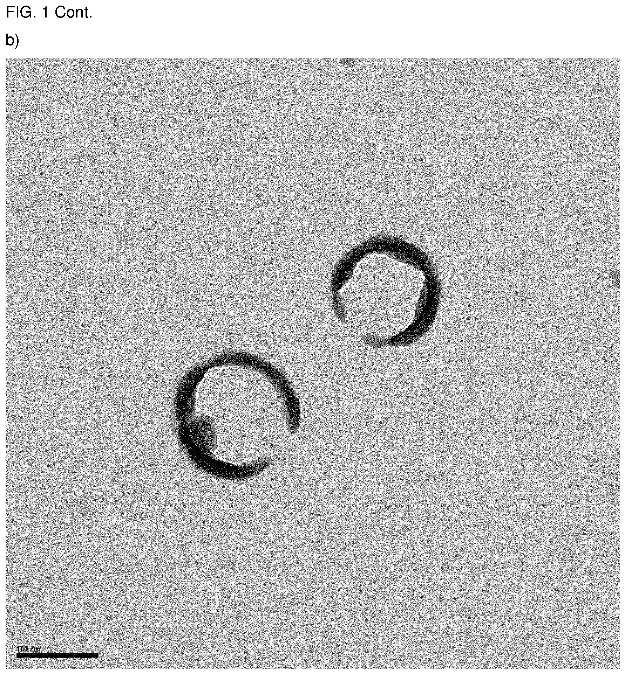

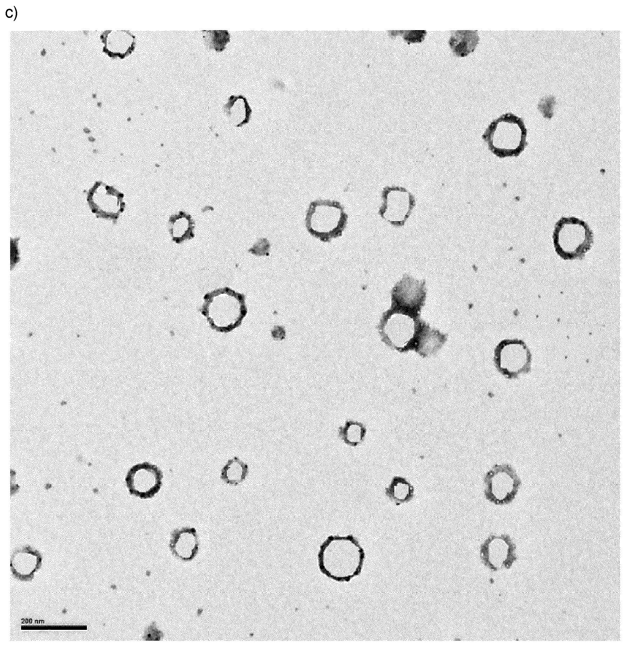

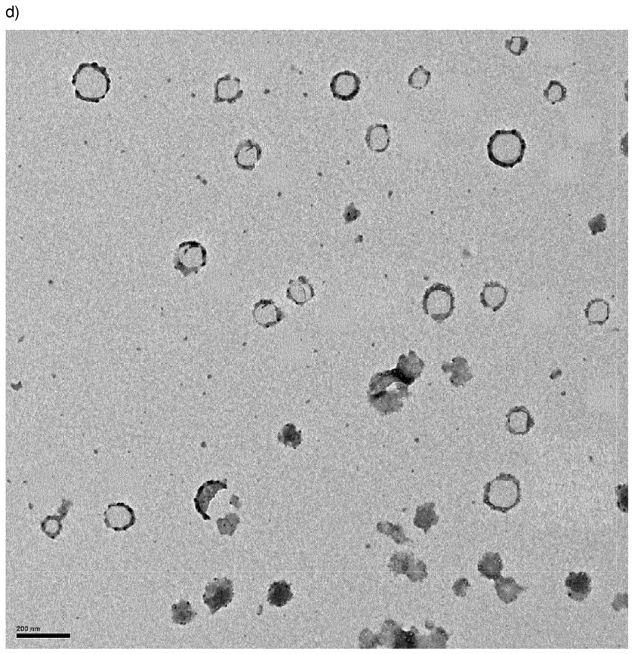

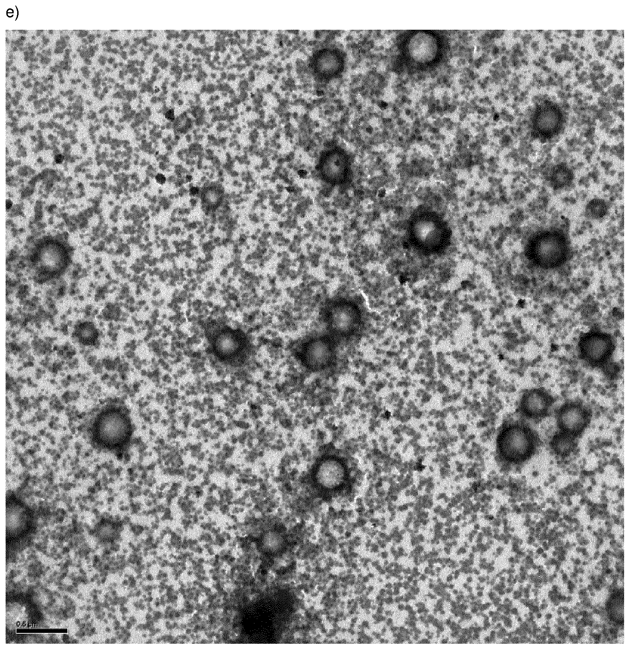

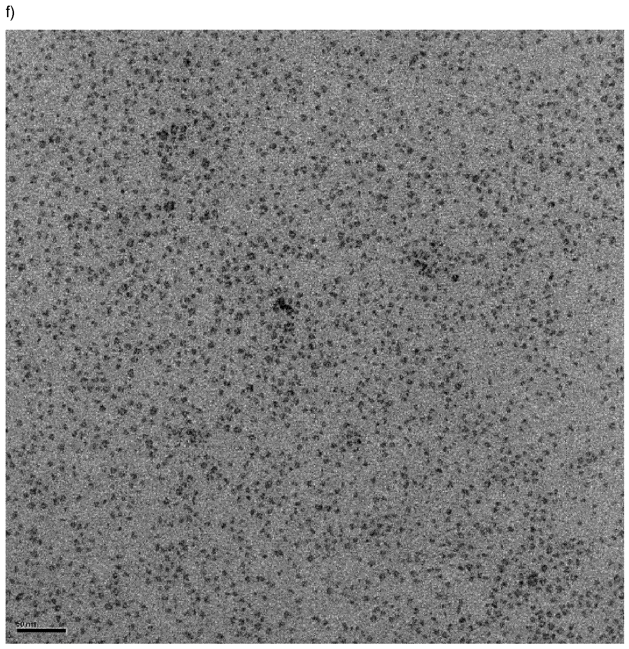

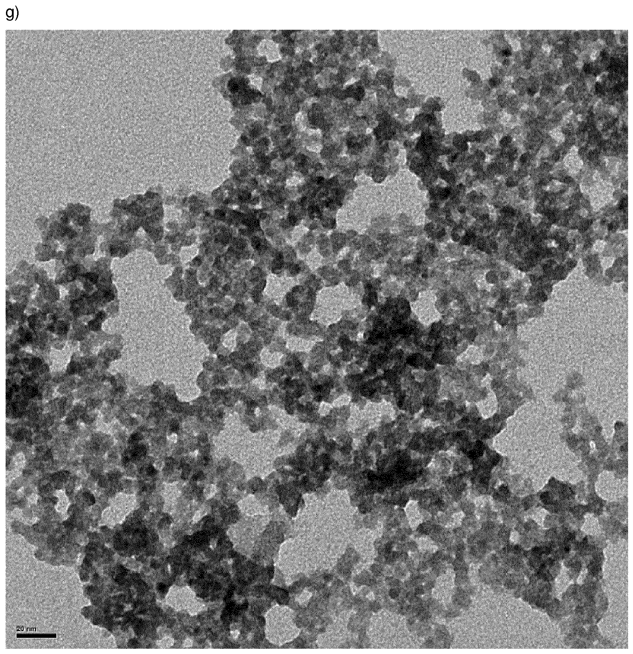

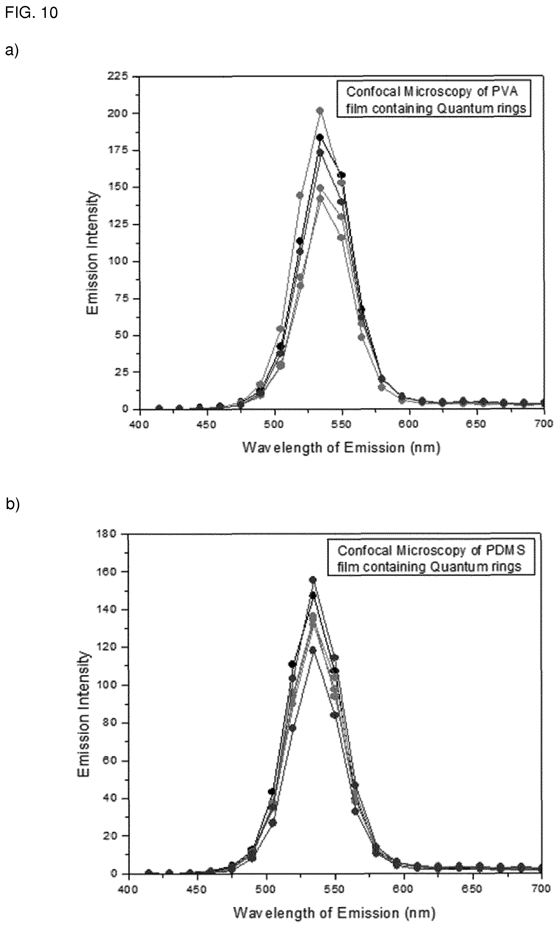

FIG. 1 TEM images of the CdSe Quantum rings
   (a) The first TEM image shows the rings at 100nm magnification of the JEOL JEM 1210 at 120 kV. TEM samples were made by dropping a drop of CdSe Quantum Ring suspension onto the carbon coated copper grids. The reaction was done for this at 150°C.
   (b) The first TEM image shows the rings at 100nm magnification of the JEOL JEM 1210 at 120 kV. TEM samples were made by dropping a drop of CdSe Quantum Ring suspension onto the carbon coated copper grids. It shows the formation of open rings is also possible using this method. The reaction was done for this at 150°C.
   (c) The first TEM image shows the rings at 200nm magnification of the JEOL JEM 1210 at 120 kV. TEM samples were made by dropping a drop of CdSe Quantum ring suspension onto the carbon coated copper grids. It shows a combination of open rings and closed rings being synthesized by this method. The reaction was done for this at 150°C.
   (d) The first TEM image shows the rings at 200nm magnification of the JEOL JEM 1210 at 120 kV. TEM samples were made by dropping a drop of CdSe Quantum ring suspension onto the carbon coated copper grids. It shows a combination of open rings and closed rings being synthesized by this method. The reaction was done for this at 150°C.
   (e) The first TEM image shows the rings at 500nm magnification of the JEOL JEM 1210 at 120 kV. TEM samples were made by dropping a drop of CdSe Quantum Ring suspension onto the carbon coated copper grids. The reaction was done for this at 170°C. This showed that at higher temperature it causes the rings to be better formed but also with a lot of quantum dots being formed in the sample.
   (f) The first TEM image shows the rings at 50nm magnification of the JEOL JEM 1210 at 120 kV. TEM samples were made by dropping a drop of CdSe Quantum dot suspension onto the carbon coated copper grids. The reaction was done for this at 150°C. This showed that at this temperature the dots formed are less aggregated.
   (g) The first TEM image shows the rings at 20nm magnification of the JEOL JEM 1210 at 120 kV. TEM samples were made by dropping a drop of CdSe Quantum dot suspension onto the carbon coated copper grids. The reaction was done for this at 170°C. This showed that at higher temperature it causes the dots to be more aggregated.
FIG. 2 Size distribution of the CdSe Quantum rings
   The Size distribution of the particles was done by measuring over 200 rings from the TEM images and then plotting the histogram in origin. The gaussian curve fitting was done to estimate the mean size of the rings which is around 10.12 nm in dimension.
FIG. 3 Size Distribution of CdSe Quantum dots
   The Size distribution of the particles was done by measuring over 200 dots from the TEM images and then plotting the histogram in origin. The gaussian curve fitting was done to estimate the mean size of the dots which is around 9.63 nm in dimension.
FIG. 4 EDX analysis of the rings show the presence of Cadmium, Sulphur and Selenium. The EDX analysis was done in QUANTA FEI 200 FEG-ESEM device. Powdered Quantum rings were measured in carbon taped stubs. The EDX analysis showed the presence of Cadmium, Selenium and Sulphur. The ratio of Cd:Se is ∼4:1
FIG. 5 EDX analysis of the dots show the presence of Cadmium, Sulphur and Selenium. The EDX analysis was done in QUANTA FEI 200 FEG-ESEM device. Powdered Quantum dots were measured in carbon taped stubs. The EDX analysis showed the presence of Cadmium, Selenium and Sulphur. The ratio of Cd:Se is ∼4:1
FIG. 6 IR Analysis of the Quantum ring and Quantum dot at 150 °C.
   The absence of S-H stretching band around 2557 cm⁻¹ clearly indicates that thiolates are connected to the Cd⁺⁺ sites on the CdSe nanocrystallite surface via sulphur atom of organic molecule. The sharp peak at 1540 cm⁻¹ can be assigned to the vibration of the carboxylate anion of MPA molecules. The band at 1420 cm⁻¹ is due to the symmetric stretching vibration C-O.

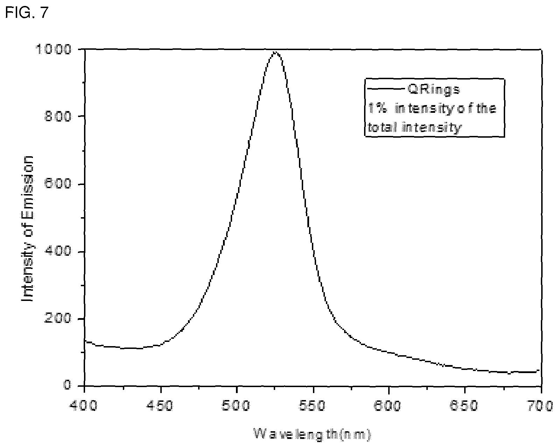

FIG. 7 Fluorescence Intensity of the obtained CdSe Quantum rings
   The fluorescence measurements were done in Perkin Elmer LS45 fluorimeter. The fluorescence intensity was measured by dispersing the powdered Quantum rings in ethanol. The intensity shown here is only 1 % of the total intensity as filter was used to record the intensity of emission. The original intensity of the Quantum rings synthesized is 100 times more than depicted here according to the arbitrary units of the instrument. The wavelength of emission is around 530 nm.

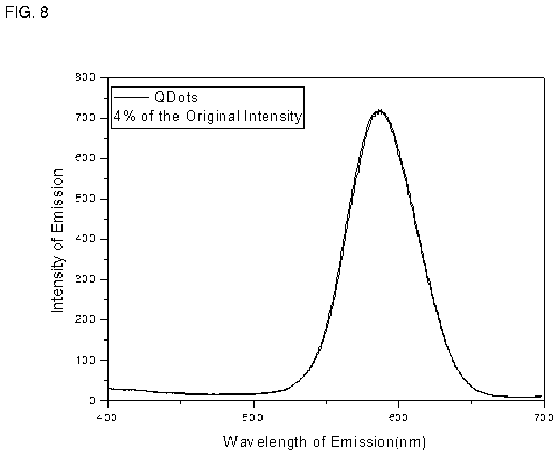

FIG. 8 Fluorescence Intensity of the obtained CdSe quantum dots for comparison
   The fluorescence measurements were done in Perkin Elmer LS45 fluorimeter. The fluorescence intensity was measured by dispersing the powdered Quantum dots in ethanol. The intensity shown here is only 4 % of the total intensity as filter was used to record the intensity of emission. The original intensity of the quantum dots synthesized is 25 times more than depicted here according to the arbitrary units of the instrument. The wavelength of emission is 590 nm.

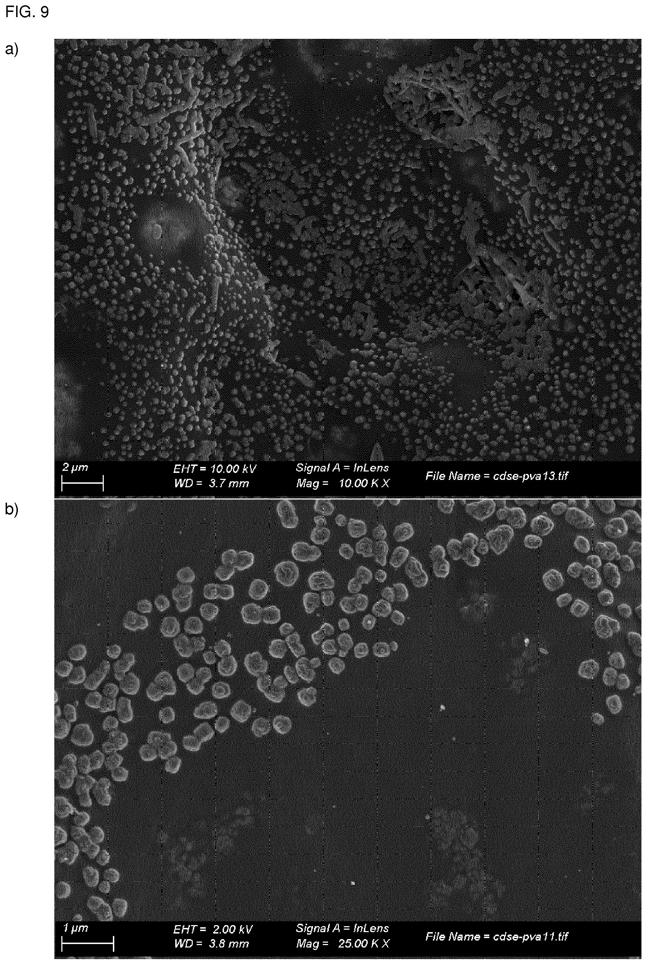

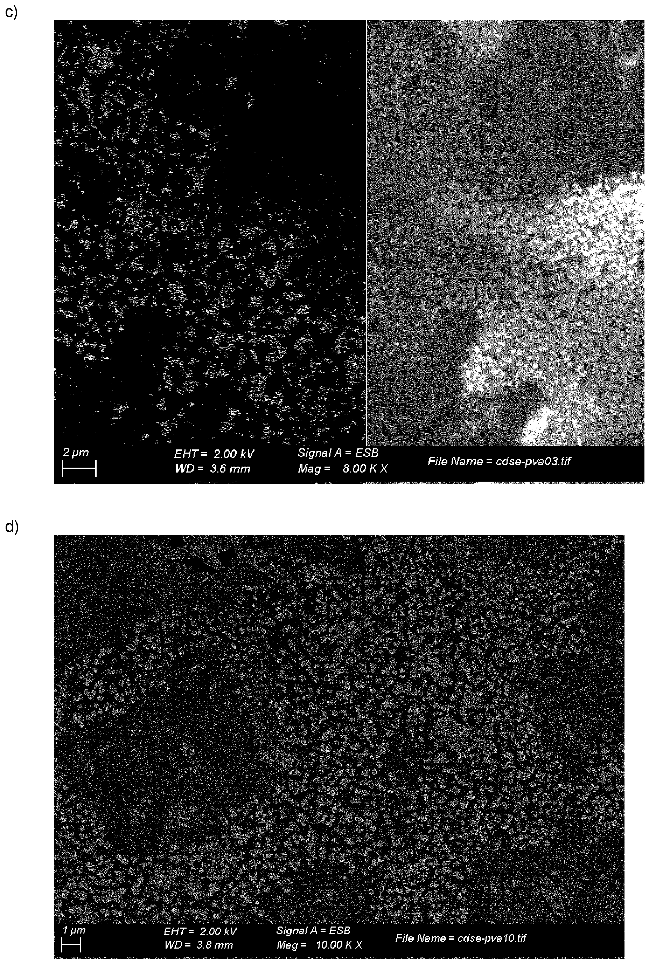

FIG. 9 HRSEM of Qrings inside the polymer
   (a) This shows the HRSEM image of the Quantum rings embedded in the polymeric films and their distribution pattern. We can see the secondary lens image, in which we can see both the film and the quantum rings embedded in this case.
   (b) This shows the HRSEM of the Quantum rings dispersed in the polymeric film at a higher magnification. It shows the secondary image from deeper levels of the film and the distribution of the quantum rings at deeper regions inside the film. It shows both the film and the quantum dots embedded inside it.
   (c) This shows the HRSEM of the film with the quantum rings. There are two images. The one on the left shows the backscattering image in which we can see only the embedded quantum rings and not the film. On the other hand, in the right image we can see the secondary lens image, in which we can see both the film and the quantum rings.
   (d) This shows the HRSEM of the Quantum rings dispersed in the polymeric film at a higher magnification. It shows the back scattered image from deeper levels of the film and the distribution of the quantum rings at deeper regions inside the film. It only shows the Quantum rings embedded inside the film
FIG. 10 Confocal Microscopy of Qrings inside the PVA polymer
   (a) The confocal microscopy was done using Olympus Fluoview 1000. The confocal microscopy of the polymeric films was done in order to obtain the wavelength of emission of the Quantum rings embedded in the polymeric film and to check whether they coincide with the wavelength of emission when they are dispersed in ethanol. The wavelength of emission was preserved for the Quantum rings although they were embedded inside the polymeric film (sample containing 3 ml of PVA solution); even inside the films they showed an emission at 530 nm, which is the same wavelength of emission as seen in the fluorescence intensity of the dispersed quantum rings.
   (b) The confocal microscopy was done using Olympus Fluoview 1000. The confocal microscopy of the polymeric films was done in order to obtain the wavelength of emission of the Quantum rings embedded in the polymeric film and to check whether they coincide with the wavelength of emission when they are dispersed in ethanol. The wavelength of emission was preserved for the Quantum rings although they were embedded inside the polymeric film (sample containing 5 ml of PDMS solution); even inside the films they showed an emission at 530 nm, which is the same wavelength of emission as seen in the fluorescence intensity of the dispersed quantum rings.

### EXAMPLES

### Example 1 Synthesis of CdSe Quantum rings

456 mg of CdCl₂.2.5H₂O (Cadmium precursor) was dissolved in 5 ml of distilled water; 56 mg of SeO₂ (Selenium precursor) was dissolved in 5 ml of distilled water. The two solutions were prepared separately and stirred for 10 minutes till they both formed clear solutions. Everything in this procedure is done in normal conditions and not under N2 atmosphere.

The Cadmium solution was then transferred to a Sigma Aldrich Ace pressure tube. The tube was inserted in a sand bath well insulated with cork. The sand bath had been covered with a cork sheet on the outer walls and the top of the bath had been covered with a cork sheet with holes to insert the tubes in them. Then when the tube with the Cadmium solution was started to being heated, 0.2 ml of Mercaptopropionic acid was added to the Cadmium solution followed by the addition of Ammonium Hydroxide to maintain the pH around 11.

Afterwards, when the temperature had reached 90 °C, after 20 minutes of heating, the Selenium precursor was added into the tube. Then, the tube was closed tightly and heated up to 160 °C. It took around 15 minutes to reach the temperature. It was maintained at this temperature for 60 minutes.

After that the tube was pulled out of the sand bath and quenched at -10°C or -12°C for 30 minutes. The low temperature is achieved by mixing ice and NaCl salt mixture. The water solution was mostly yellowish in color. The yellow solution was then centrifuged for 30 minutes at 6000rpm and yellow precipitate was obtained. The precipitate was further washed with water twice and then the precipitate is left for drying in vacuum and dispersed in ethanol. This suspension showed bright green and greenish-yellow fluorescence and had Quantum rings in them.

A high yield for both, solid and dispersed form of the Quantum Rings is achieved by following the mentioned process. The yield is more than 90% for the Quantum Rings.

### Synthesis of CdSe Quantum dots for comparison

456 mg of CdCl₂.2.5H₂O (Cadmium precursor) was dissolved in 5 ml of distilled water; 56 mg of SeO₂ (Selenium precursor) was dissolved in 5 ml of distilled water. The two solutions were prepared separately and stirred for 10 minutes till the formation of clear solutions. Everything in this procedure is done in normal conditions; N₂ atmosphere is not necessary.

The Cadmium solution was then transferred to a Sigma Aldrich Ace pressure tube. The tube was inserted in a sand bath well insulated with cork. The sand bath had been covered with a cork sheet on the outer walls and the top of the bath had been covered with a cork sheet with holes to insert the tubes in them. Then, when the tube with the Cadmium solution was started to being heated, 0.2 ml of Mercaptopropionic acid was added to the Cadmium solution followed by the addition of Ammonium Hydroxide to maintain the pH around 11.

Afterwards, when the temperature had reached 80 °C, after 15 minutes of heating, the Selenium precursor was added into the tube. Then, the tube was closed and heated up to 100 °C. It took around 5 minutes to reach the temperature. It was maintained at this temperature for 60 minutes.

After that the tube was pulled out of the sand bath and left to cool to room temperature. It was not quenched at low temperature of -10 °C or -12 °C. It was normally quenched at room temperature. The water solution was mostly orange in color. The orange solution was then centrifuged for 30 minutes at 6000 rpm and an orange precipitate was obtained. The precipitate was further washed with water twice and then the precipitate is left for drying in vacuum and dispersed in ethanol. This suspension showed bright yellow fluorescence and had Quantum dots in them.

A high yield for both, solid and dispersed form of the Quantum Dots is achieved by following the mentioned process. The yield is 90 to 95%.

### Characterization of the obtained CdSe Qrings

### TEM of the CdSe Quantum rings and the Quantum dots

The TEM images (FIG. 1 (a) - (g)) show the rings at 100 nm, 200 nm and 500 nm magnification of the JEOL JEM 1210 at 120 kV. TEM samples were made by dropping a drop of CdSe Quantum Ring suspension onto the carbon coated copper grids. The first four images correspond to the sample where the reaction was done for at 150 °C and then quenched at low temperature. For the last image, the reaction was done for at 170 °C. This showed that at higher temperature it causes the rings to be better formed but also with a lot of quantum dots being formed in the sample.

The TEM image shows the dots at 50 nm and 20 nm magnification respectively of the JEOL JEM 1210 at 120 kV. TEM samples were made by dropping a drop of CdSe Quantum dot suspension onto the carbon coated copper grids. For the first image, the reaction was done at 150 °C. This showed that at this temperature the dots formed are less aggregated. For the next image the reaction was done at 170 °C. This showed that at higher temperature it causes the dots to be more aggregated.

### Size distribution of the CdSe Quantum rings and Quantum dots

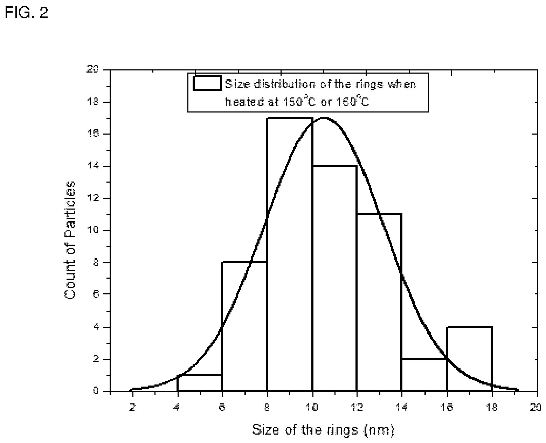

The size distribution of the particles was done by measuring over 200 rings from the TEM images and then plotting the histogram in origin. The gaussian curve fitting was done to estimate the mean size of the rings which is around 10.12 nm in dimension. (FIG. 2)

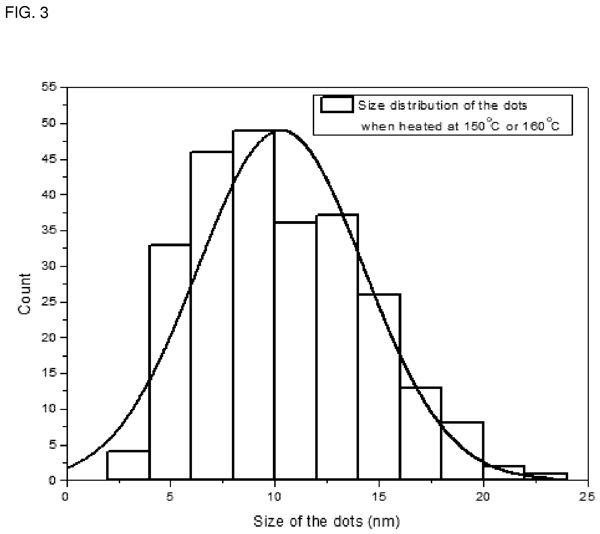

The size distribution of the particles was done by measuring over 200 dots from the TEM images and then plotting the histogram in origin. The gaussian curve fitting was done to estimate the mean size of the dots which is around 9.63 nm in dimension. (FIG. 3)

### EDX Analysis of the Quantum rings and Quantum dots

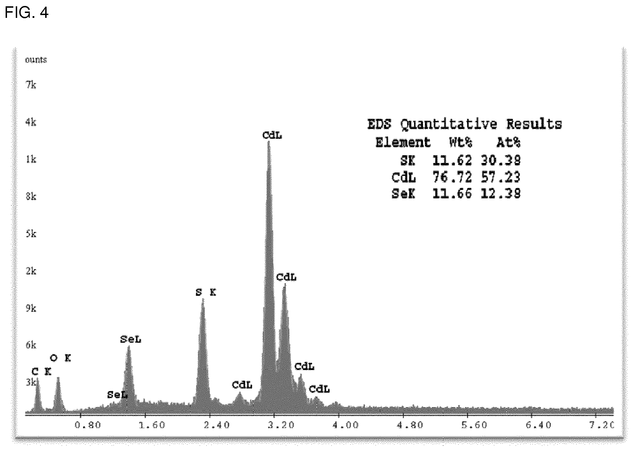

EDX analysis of the rings show the presence of Cadmium, Sulphur and Selenium. The EDX analysis was done in QUANTA FEI 200 FEG-ESEM device. Powdered Quantum rings were measured in carbon taped stubs. The EDX analysis showed the presence of Cadmium, Selenium and Sulphur. The ratio of Cd:Se is -4:1 (FIG. 4)

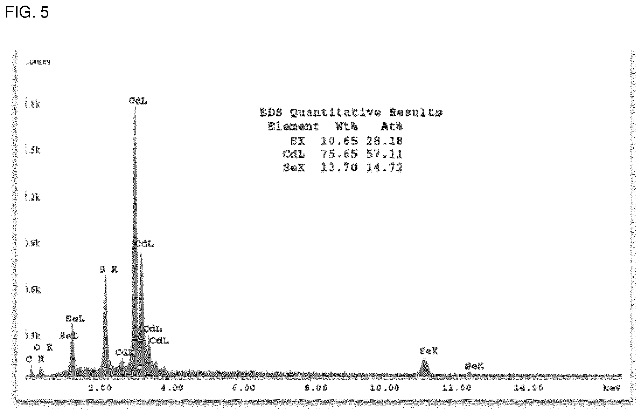

For comparison EDX analysis of the dots show the presence of Cadmium, Sulphur and Selenium. The ratio of Cd:Se is -4:1 (FIG. 5)

### IR Analysis of the Quantum ring and Quantum dots

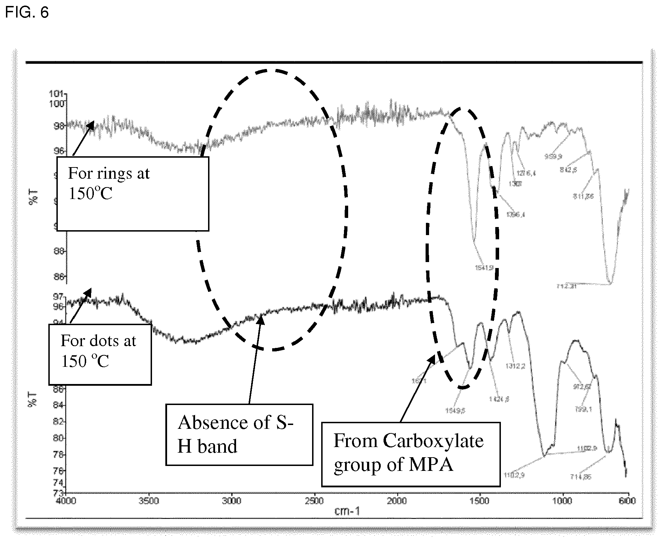

IR Analysis of the Quantum ring and Quantum dot at 150°C was done at JASCO FT/IR 4700 machine. (FIG. 6)The absence of S-H stretching band around 2557 cm⁻¹ clearly indicates that thiolates are connected to the Cd⁺⁺ sites on the CdSe nanocrystallite surface via sulphur atom of organic molecule. The sharp peak at 1540 cm⁻¹ can be assigned to the vibration of the carboxylate anion of MPA molecules. The band at 1420 cm⁻¹ is due to the symmetric stretching vibration C-O. The blue one is for the rings produced at high temperature while the black one is for the dots produced at high temperature.

### Fluorescence Spectrum of the obtained CdSe Quantum rings and Quantum Dots

The fluorescence measurements were done in Perkin Elmer LS45 fluorimeter, see FIG. 7. The fluorescence intensity was measured by dispersing the powdered Quantum rings in ethanol. The intensity shown here is only 1% of the total intensity as filter was used to record the intensity of emission. The original intensity of the Quantum rings synthesized is 100 times more than depicted here according to the arbitrary units of the instrument. The wavelength of emission is around 530 nm.

The fluorescence intensity was measured by dispersing the powdered Quantum dots in ethanol. The intensity shown here is only 4% of the total intensity as filter was used to record the intensity of emission. The original intensity of the Quantum rods synthesized is 25 times more than depicted here according to the arbitrary units of the instrument. The wavelength of emission is 590 nm. (FIG. 8)

### Example 2: Polymeric films embedding CdSe Quantum Rings

The above synthesized Quantum Rings in water were used to prepare polymeric films with Polyvinyl Alcohol (PVA). The above synthesized quantum rings in water were used to prepare polymeric films with Polyvinyl Alcohol (PVA) and Poly dimethyl siloxane (PDMS). The powdered rings were dispersed in a solution of PVA or PDMS and made into films. The PVA solution was made with 300 mg of PVA powder of molecular weight ∼31000 dissolved in 10 ml of water. The solution was heated at 60 °C for 6 hours to completely dissolve in water. Once the PVA solution was made it was kept to cool down for some time. After that, 15 mg of CdSe Quantum Rings were dissolved in PVA solution of 3 ml. Other solutions of 4 ml, 5 ml and 6 ml volume of PVA each containing 15 mg of CdSe Quantum rings were made too. These solutions were stirred for 1 hour to get a smooth consistency between the polymer and the solid Quantum rings. After that, the suspension of Quantum rings and PVA was spread across glass slides by doctor blading with scotch tapes to produce the films. These films were left to be dried for over-night and then they were peeled off from the slides and characterized using confocal microscopy to get images of their fluorescence and also the wavelength of emission. The wavelength of emission for these films embedding Quantum rings coincided with the emission wavelength of the Quantum rings in solution. Out of all the samples made, the films made with 3 ml and 4 ml of PVA solution showed brighter intensity of fluorescence than the rest of the films and it also was much thinner than the rest thus helping in enhancing the fluorescence intensity.

The PDMS was used from the kit with its own curing agent to make the films. The solid Quantum rings were taken about 15 mgs and mixed with the PDMS polymer liquid of 5ml and mixed with its curing agent. Then this mixture was made into a film on the glass slide using doctor blading and then left to dry overnight and a film was obtained. The PDMS film with the Quantum rings in them was more flexible than the one made with PVA and this too showed the fluorescence emission of the Quantum rings in the same range of 525 nm in the confocal microscopy.

These Polymeric films embedding the above described Quantum rings can be ideal candidates to be used instead of organic dyes for the preparation of QLEDs and show much brighter emission.

### Characterization of the Quantum Rings embedded in Polymeric films

### HRSEM of Qrings inside the polymer film

HRSEM was done in SEM Zeiss Merlin machine. This helped us to visualize the quantum rings embedded inside the film. It had two different microscopic views. One, the secondary lens which helped us to visualize the rings and the film together. Second, the back scattering image which helped us to see only the rings and not the surface of the films. This was achieved by metallizing the polymer film with a thin coat of gold before checking it inside the HRSEM machine. This was done to improve the conductance of the sample and in order to obtain better images. (FIG. 9)

### Confocal Microscopy of the Qrings inside the polymer film

The confocal microscopy was done using Olympus Fluoview 1000. The confocal microscopy of the polymeric films was done in order to obtain the wavelength of emission of the Quantum rings embedded in the polymeric film and to check whether they coincide with the wavelength of emission when they are dispersed in ethanol. The wavelength of emission was preserved for the Quantum rings although they were embedded inside the polymeric film (sample containing 3 ml of PVA solution); even inside the films they showed an emission at 530 nm, which is the same wavelength of emission as seen in the fluorescence intensity of the dispersed quantum rings. (FIG. 10)

## Claims

1. A process for obtaining Quantum rings in aqueous media having a composition selected from ZnSe, ZnS, CdS or CdSe, **characterized in that** it comprises the following steps:
a) sequentially adding an aqueous solution comprising Cd⁺² or Zn⁺², a surfactant agent and a reducing agent into high pressure device;
b) adjusting the pH of the solution obtained in step (a) by adding a base to reach a pH range between 9 and 12;
c) heating the high-pressure device to raise its temperature to a temperature value of between 85 ºC and 95 ºC;
d) adding an aqueous solution of SeO₂ or an aqueous solution comprising S²⁻ to the heated solution obtained in step (c);
e) heating the high pressure device to raise its temperature to a temperature value of between 150 ºC and 170 ºC and maintaining said temperature for a time period of between 50 min and 80 min;
f) quenching the solution obtained in step (e) to a temperature of between -15 ºC and 35 ºC thereby inducing precipitation; and
g) extracting the quenched precipitate obtained in step (f).

2. The process according to claim 1, **characterized in that** the aqueous solution of comprising Cd⁺² or Zn⁺² ions of step (a) has a concentration of between 0.35 M and 0.45 M.

3. The process according to claim 1 or 2, **characterized in that** the surfactant agent and the reducing agent of step (a) are the same as or different from each other.

4. The process according to claim 3, **characterized in that** the surfactant agent and the reducing agent of step (a) are the same.

5. The process according to any of claims 1 to 4, **characterized in that** the surfactant agent and the reducing agent of step (a) are a mercaptan acid.

6. The process according to any of claims 1 to 5, **characterized in that** the concentration of the surfactant agent and the reducing agent of step (a) is between 0.2 M and 0.3 M.

7. The process according to any of claims 1 to 6, **characterized in that** the base of step (b) is an amine, NaOH or KOH.

8. The process according to any of claims 1 to 7, **characterized in that** the pH reached in step (b) is ranging between 10 and 11.5.

9. Quantum rings obtainable by the process according to any of claims 1 to 8, **characterized in that** their mean diameter is between 5 nm to 20 nm.

10. Quantum rings according to claim 9, wherein their mean diameter ranges between 2 nm and 10 nm.

11. Film, **characterized in that**
• it is made of a polymer selected from a Poly(vinyl alcohol), Polyvinyl Butyral, Polyvinyl Formal and Polydimethyl siloxane,
• it comprises the Quantum rings according to any of claims 9 or 10,
wherein the Quantum rings are homogeneously distributed in the polymeric film and wherein the percent of the Quantum rings in the polymeric film is between 70 % and 95 %.

12. Use of the Quantum rings according to any of claims 9 or 10, or the film according to claim 11, as part of a device useful in optoelectronics.

13. Use of the Quantum rings according to any of claims 9 or 10, or the film according to claim 11, as polarized emitter.

14. Use of the Quantum rings according to any of claims 9 or 10 in biotechnological applications such as biological label reagent.

15. Use of the Quantum rings according to any of claims 9 or 10 or the film according to claim 11, as part of a device useful for biomedical imaging applications.

16. Use of the Quantum rings according to any of claims 9 or 10 or the film according to claim 11, as part of a Quantum light-emitting diode LED.
